# EUROPÄISCHE PATENTANMELDUNG

(11) **EP 0 903 673 A2**
(43) Veröffentlichungstag der Anmeldung: **24.03.1999**
(21) Anmeldenummer: 98117747.0
(22) Anmeldetag: 18.09.1998
(51) Int. Cl.: G06F 17/27, G06F 17/28

(54) **Vorrichtung zum systematischen Erfassen und Bearbeiten von sprachbezogenen Daten**

(30) Priorität: 22.09.1997 DE 19741505; 17.12.1997 DE 19756040
(71) Anmelder: Rahmstorf, Antje, 69118 Heidelberg (DE)
(72) Erfinder: Rahmstorf, Gerhard Prof. Dr., 69118 Heidelberg (DE); Lein, Hendrik, 01796 Pirna (DE)
(74) Vertreter: Rückert, Susanne

(57) **Zusammenfassung**

Zur systematischen Erfassung von sprachbezogenen Begriffssystemen wird eine Vorrichtung vorgeschlagen mit einer Eingabevorrichtung und mindestens einem Monitor zum Visualisieren zumindest eines Teils einer Benutzeroberfläche, mit Mitteln zum Manipulieren von visualisierten Daten in der Benutzeroberfläche, mit Mitteln zum Bearbeiten der Daten und mit Mitteln zum Abspeichern der Daten, die dadurch gekennzeichnet ist, daß die Benutzeroberfläche die Eingabe und Visualisierung von sprachbezogenen Daten unterschiedlicher Kategorie vorsieht, nämlich:
- Eintragswort (Lemma)
- lexikalische Daten des Lemmas
- verbale Bedeutungsdefinitionen (Lesarten) des Lemmas
- Angaben zu den einzelnen Lesarten des Lemmas
- Strukturformeln zu den einzelnen Lesarten des Lemmas (strukturelle Bedeutungsdefinitionen)
- begriffliche Strukturen
indem die Benutzeroberfläche zur Eingabe und Visualisierung der Daten verschiedene, jeweils für eine definierte Datenkategorie bestimmte Datenfelder aufweist, und daß die Mittel zum Abspeichern der Daten so ausgelegt sind, daß die eingegebenen Daten zusammen mit der dem jeweiligen Datenfeld entsprechenden Datenkategorie in Form eines Datensatzes abgespeichert werden.

## Beschreibung

Die Erfindung betrifft eine Vorrichtung zum systematischen Erfassen und Bearbeiten von sprachbezogenen Daten, mit einer Eingabevorrichtung und mindestens einem Monitor zum Visualisieren zumindest eines Teils einer Benutzeroberfläche, mit Mitteln zum Manipulieren von visualisierten Daten in der Benutzeroberfläche, mit Mitteln zum Bearbeiten der Daten und mit Mitteln zum Abspeichern der Daten.

Die Erfindung ist dem Gebiet der Datenerfassungssysteme und Editoren zuzurechnen. Derartige Systeme werden zur Eingabe von Testen und anderen Daten verwendet, mit dem Ziel, diese Informationen so weiterzuverarbeiten, daß verschiedenste Endprodukte möglichst einfach, schnell und fehlerfrei erstellt werden können. Als Eingabevorrichtung dient im einfachsten Falle eine Tastatur, kann aber bspw. auch ein grafisches Tablett oder Touch-Screen verwendet werden. Die in der auf dem Monitor wiedergegebenen Benutzeroberfläche visualisierten Daten können bspw. mit Hilfe einer Maus, eines Trackballs oder auch eines Joy-Sticks manipuliert werden.

Die erfindungsgemäße Vorrichtung ist speziell zum systematischen Erfassen und Bearbeiten von sprachbezogenen Begriffssystemen entwickelt worden. Anwendungsgebiete für ein derartiges Datenerfassungssystem sind bspw. die Lexikographie - die Wortschatzbeschreibung und Wörterbuchherstellung -, die Terminologie, der Thesaurusaufbau und dessen Pflege, automatische Übersetzungen, der Aufbau von Klassifikationen für Bibliotheken, Archive und Dokumentationsstellen, die thematische Indexierung von Dokumenten, das semantische "Information Retrieval", die Entwicklung von Navigationssystemen für Informationssysteme, Wissensrepräsentation, etc..

Mit den aus der Praxis bekannten, für die Wörterbucharbeit entwickelten Editoren können lediglich einzelne Wörter zusammen mit lexikalischen Daten, z.B. der Wortart, der Aussprache, der Flexion oder syntaktischen Angaben, sowie verschiedene Bedeutungen eines Wortes erfaßt werden. Die bekannten Systeme bieten jedoch keine spezielle Unterstützung für die Erfassung und Bearbeitung von begrifflichen Strukturen zur Darstellung der Wortbedeutungen.

Aufgabe der vorliegenden Erfindung ist es nun, eine Vorrichtung zum systematischen Erfassen und Bearbeiten von sprachbezogenen Daten anzugeben, mit der nicht nur einzelne Wörter zusammen mit lexikalischen Angaben und Bedeutungen erfaßt werden können, sondern auch ganze Begriffssysteme erstellt und einfach modifiziert werden können.

Bei der Erfassung von Wörtern und Ausdrücken, die aus einzelnen Wörtern zusammengesetzt sind, sind folgende Datenkategorien zu unterscheiden:
1. Eintragswort (Lemma)
2. lexikalische Daten des Lemmas
3. verbale Bedeutungsdefinitionen (Lesarten) des Lemmas
4. Angaben zu den einzelnen Lesarten des Lemmas
5. Strukturformeln zu den einzelnen Lesarten des Lemmas (strukturelle Bedeutungsdefinitionen)
6. begriffliche Strukturen

Mit der erfindungsgemäßen Vorrichtung sollen sprachbezogene Daten erfaßt werden, die zu einem bestimmten Wortschatz gehören. Dabei kann es sich z.B. um gemeinsprachliche Wörter, Fachwörter, terminologische Ausdrücke - wie Diagnosen, chemische Verbindungen, Werkstoffbezeichnungen usw. - oder sprachliche Benennungen von Klassen beliebiger Ordnungssysteme - wie Diagnoseschlüssel, bibliothekarische Klassifikationssysteme, Thesauren usw. - handeln.

Die zu erfassenden, sprachbezogenen Daten werden zu Einträgen zusammengefaßt, die jeweils mit einem Eintragswort - dem Lemma - gekennzeichnet sind. Als Lemma wird in der Regel die Nennform eines Wortes verwendet. Über die alphabetisch geordneten Lemmata kann der Benutzer oder auch ein Sprachverarbeitungsprogramm auf die dem ausgewählten Lemma zugeordneten Wortdaten zugreifen. Jedem Lemma sind sowohl Iexikalische Daten als auch Lesarten zugeordnet. Bei den lexikalischen Daten handelt es sich, wie bereits erwähnt, um Angaben wie Wortart, Aussprache, Flexion, syntaktische Angaben und andere Informationen. Die Lesarten entsprechen den einzelnen unterscheidbaren Bedeutungen eines Wortes. Diese werden in Form von verbalen Bedeutungsdefinitionen wiedergegeben. Außerdem können jeder Lesart noch weitere Angaben zugeordnet sein. Die gegenwärtig im Buchhandel angebotenen einsprachigen, alphabetisch geordneten Wörterbücher beschränken sich auf die voranstehend aufgeführten Informationen.

Für die Erfassung von ganzen Begriffssystemen, die sich auf einen bestimmten Wortschatz beziehen oder darüber hinaus aus den Bedeutungsangaben der Wörter dieses Wortschatz:es abgeleitet werden sollen, sind weitere Informationen erforderlich, deren Erfassung aufgrund der folgenden Aspekte problematisch ist:
1. Komplexität des Wortmaterials
2. Unzulänglichkeit der linguistisch-logischen Repräsentationsmethoden
3. technische Schwierigkeiten bei der Bearbeitung und Verwaltung von Wortschatz und Strukturen
4. wirtschaftliche Anforderungen an das Erfassungssystem

Die Komplexität des Wortmaterials besteht zunächst darin, daß erst bei 100.000 und mehr Wörtern von einer gewissen Vollständigkeit eines Wortschatzes ausgegangen werden kann. Außerdem verändert und erweitert sich der Wortschatz einer lebenden Sprache ständig. Daneben muß in der Regel auch die Sprachenvielfalt berücksichtigt werden. Hinzu kommt, daß jedes einzelne Wort durch eine Fülle von grammatischen und anderen Merkmalen gekennzeichnet werden kann, wobei unterschiedliche Wortarten sinnvollerweise durch unterschiedliche Merkmalsstrukturen beschrieben werden sollten. So müssen bspw. Verben durch andere Merkmale codiert werden als Substantive. In diesem Zusammenhang sei angemerkt, daß auch die einzelnen Merkmale sehr komplex sein können. Die Komplexität des Wortmaterials ist schließlich auch noch auf das Auftreten von Mehrdeutigkeiten und Synonymitäten einzelner Wörter zurückzuführen, so daß eine n zu n-Zuordnung zwischen Lemmata und Lesarten vorgesehen werden muß. Ein Lemma kann mehrere Lesarten haben. Eine Lesart - als Begriff verstanden - kann die Bedeutung mehrerer Lemmata sein.

Der zweite Problemkreis ergibt sich aus der Frage, wie Wortbedeutungen repräsentiert werden sollen. Hierfür gibt es verschiedene in der Logik und Linguistik entwickelte Vorschläge, die aber äußerst komplex sind und daher in der Praxis bislang nicht in Verbindung mit größeren Wortbeständen eingesetzt wurden. Eine durchgängige, praktisch nutzbare Codierung von Definitionen für Lesarten eines größeren Wortbestandes einer Sprache existiert derzeit nicht. Die Codierung von Bedeutungen befindet sich noch in einem experimentellen Zustand. Deshalb haben auch die Strukturen, die derzeit codiert werden, lediglich vorläufigen Charakter und werden sicherlich in der weiteren Auseinandersetzung mit dem Thema überarbeitet, verbessert und präzisiert werden müssen. Dennoch können mit Strukturdarstellungen, die über die konventionelle Thesaurustechnik hinausgehen, neue Funktionen und verbesserte Leistungen von Retrieval-Systemen erprobt und genutzt werden. Neue Systeme, die eine Wortschatzerfassung zusammen mit einer Strukturerfassung unterstützen, müssen daher in ihrer Funktionalität flexibel angelegt werden.

Selbst wenn die in Verbindung mit der Komplexität und methodischen Behandlung der sprachbezogenen Daten eines Wortschatzes auftretenden Probleme beherrscht werden, müssen Fachleute - quasi in Handarbeit - große Mengen von sprachlich ausgedrückten Definitionen und Strukturen in formale Ausdrücke umsetzen, um diese dann bei den entsprechenden Wörtern der Wortschatz- und Strukturdatenbank abzuspeichern. Insbesondere das Codieren der Strukturen als Formeln mit komplex geschachtelten Klammerausdrücken ist extrem mühsam und fehleranfällig und erfordert ein hohes Maß an Konzentration. Da außerdem auch die Möglichkeit bestehen muß, einmal erfaßte Daten und insbesondere Strukturen wieder zu ändern, wobei die Konsistenz der Daten insgesamt gewahrt bleiben muß, ist eine maschinelle Unterstützung bei der Erfassung, Bearbeitung und Verwaltung der Daten wünschenswert.

Nicht zuletzt aus wirtschaftlichen Gründen sollte eine Vorrichtung zum Erfassen und Bearbeiten von sprachbezogenen Daten in Begriffssystemen auch die bisher angewandte konventionelle Technik unterstützen, zum einen um die bereits erfaßten Wortbestände, Terminologien, Thesauren, Klassifikationssysteme, Menüsysteme und sonstigen Ordnungsmittel zu nutzen und zum anderen um auch die bisherigen Anwendungen, wie z.B. Thesaurusprogramme oder die bisher eingesetzte Software zur Indexierung ersetzen zu können. Neben die bisherige interaktive Verwendung der konventionellen Technik sollen in Zukunft weitere Verwendungen treten, wie die Verwendung von Wortschatzdaten und zugehörigen Strukturen für Retrieval-Systeme, um sprachlich formulierte Anfragen zu interpretieren, in andere Sprachen zu übersetzen und um Suchvorgänge und Relevanzentscheidungen maschinell durchzuführen. Aus den Daten, an denen sich ein Benutzer orientiert, werden wesentlich komplexere Datenstrukturen, die mit Hilfe von Algorithmen maschinell weiterbearbeitet werden können.

Zur Lösung der voranstehend angegebenen und erläuterten Aufgabe wird eine Vorrichtung zum systematischen Erfassen und Bearbeiten von sprachbezogenen Daten mit den Merkmalen des Patentanspruches 1 vorgeschlagen. Danach ist die eingangs genannte Vorrichtung derart ausgebildet, daß die Benutzeroberfläche die Eingabe und Visualisierung von sprachbezogenen Daten unterschiedlicher Kategorie vorsieht, nämlich:
- Eintragswort (Lemma)
- lexikalische Daten des Lemmas
- verbale Bedeutungsdefinitionen (Lesarten) des Lemmas
- Angaben zu den einzelnen Lesarten des Lemmas
- Strukturformeln zu den einzelnen Lesarten des Lemmas (strukturelle Bedeutungsdefinitionen)
- begriffliche Strukturen
indem die Benutzeroberfläche zur Eingabe und Visualisierung der Daten verschiedene, jeweils für eine definierte Datenkategorie bestimmte Datenfelder aufweist, und daß die Mittel zum Abspeichern der Daten so ausgelegt sind, daß die eingegebenen Daten zusammen mit der dem jeweiligen Datenfeld entsprechenden Datenkategorie in Form eines Datensatzes abgespeichert werden. Alle Datensätze einer Datei bilden zusammen ein Wörterbuch.

Die erfindungsgemäß vorgeschlagene Vorrichtung erweitert damit den Funktionsumfang bisher bekannter Systeme zur Daten- und Texterfassung so, daß eine integrierte Erfassung und Bearbeitung von Wortschatz und begrifflichen Strukturen möglich ist. Dies wird durch eine spezielle Aufteilung der Benutzeroberfläche in Datenfelder für verschiedene Datenkategorien erreicht. Die Benutzeroberfläche sieht ausdrücklich auch die Eingabe und Visualisierung von begrifflichen Strukturen vor. Begriffliche Strukturen werden aus Begriffen gebildet, die durch zweistellige gerichtete Relationen verknüpft sind. Die primäre Darstellungsweise für begriffliche Strukturen sind Formeln einer Begriffssprache. Jede mögliche Formel dieser Begriffssprache definiert einen Begriff. Formeln werden im Datensatz als Text dargestellt. Sie können visualisiert werden und erscheinen dann in grafischer Darstellungsform als grafische Strukturen. Die einzelnen Lesearten der Lemmas, die zu bestimmten Wortarten, z. B. Substantiv, Verb und Adjektiv gehören, werden als Begriffe interpretiert. Begriffe werden als Knoten in der grafischen Strukturdarstellung wiedergegeben. Lesearten anderer Lemmata, z. B. der Präpositionen, werden als Relationen interpretiert. Relationen werden in der grafischen Darstellungsform als Kanten der Struktur wiedergegeben.

Alle Strukturen, die mit der Vorrichtung erfaßt werden, werden bei den Lemmata eines Wörterbuchs abgespeichert. Es sind zwei Arten von Strukturen zu unterscheiden:
definierende Strukturen
nichtdefinierende Relationen

Mit den definierenden Strukturen wird festgehalten, wie ein bestimmter Begriff, der durch eine gegebene Leseart ausgedrückt wird, durch andere Begriffe, die wiederum durch andere Lesarten ausgedrückt werden, definiert wird. Definierende Strukturen müssen bestimmte Bedingungen erfüllen, die durch die Begriffssprache beschrieben werden. Es muß insbesondere auch eine Definitionsrichtung festgelegt sein. In der grafischen Darstellungsweise wird die Definitionsrichtung durch ein Kreuz markiert, das sich an dem Ende der Relationskante befindet, das auf den durch die Relation definierten Begriff weist. In den Ausdrücken der Begriffssprache, das sind die Strukturformeln der Lesarten, sind definierende Relationen angegeben, die den gegebenen Begriff mit anderen Begriffen verknüpfen, sowie die definierenden Relationen dieser Begriffe. Die Definitionsstruktur jedes Begriffs führt letztlich auf nicht weiter zerlegbare, axiomatische Begriffe, die bestimmten Lesarten von Wörtern des Wörterbuchs entsprechen. Alle Begriffe werden direkt oder indirekt auf einen allgemeinsten Begriff definitorisch zurückgeführt, der durch das Symbol TOP gekennzeichnet wird.

Zusätzlich zu den durch Relationen definierten Begriffen können Begriffe durch hierarchisch aufgebaute Notationen eingeführt werden. So kann ein Begriff durch die Notation 4.7 in der zweiten Hierarchieebene unterhalb von TOP an der Position 7 dieser Hierarchieebene stehen; er ist von dem Begriff mit der Notation 4 auf der ersten Hierarchieebene abhängig. Der Begriff mit der Notation 4 ist nur noch von TOP abhängig. Diese numerisch-hierarchische Notation erlaubt es, Lesarten, die sich nicht durch andere Begriffe mit bestimmten Relationen definieren lassen, in der Begriffssprache zu verwenden. Sie können damit vom Benutzer in einer Baumstruktur nach einem intuitiven Bedeutungsverständnis geordnet und in dieser Ordnung mit der Vorrichtung in Begriffssysteme eingeführt und visualisiert werden. Die regulär mit definierenden Relationen eingeführten Begriffe können in ihrer Definitionsstruktur Begriffe enthalten, die mit Notationen eingeführt wurden.

Nichtdefinierende Relationen werden verwendet, wenn Begriffe zusätzlich durch Beziehungen verknüpft werden sollen, die nicht als definierend betrachtet werden sollen. Das können z. B. die Gegensatzrelationen und die Assoziationsrelation sein. Die Verwendung von nichtdefinierenden Relationen wird nicht durch die formalen Regeln, nach denen Ausdrücke der Begriffssprache aufgebaut sein müssen, beschränkt. Benutzer können mit ihnen beliebige Begriffe, die durch Strukturformeln der Begriffssprache identifiziert werden, verknüpfen. Die nichtdefinierenden Relationen bilden ein eigenes Begriffssystem, das dem Begriffssystem der definierenden Strukturen überlagert ist und von diesem abhängig ist.

Begriffssysteme werden dadurch gebildet, daß die definierenden Strukturen, die durch Strukturformeln von verschiedenen Lesarten gebildet werden, vereint werden. Die definierenden Strukturen aller Wörter eines gegebenen Wortschatzes ergeben ein komplexes Begriffssystem. Für jeden Begriff dieses Begriffssystems ist durch die Begriffssprache festgelegt, welche anderen Begriffe des Begriffssystems zu seiner Definitionsstruktur gehören und welche anderen Begriffe von ihm wiederum definitorisch abhängig sind. Aus einem so aufgebauten Begriffssystem lassen sich damit definierende Strukturen als Teile des gesamten Begriffssystems dadurch selektieren, daß irgendein Begriff des Begriffssystems selektiert wird. Diese Selektion wird in der textlichen Darstellung des Begriffssystems durch Angabe einer Formel, in der grafischen Darstellung des Begriffssystems durch Auswahl eines Knotens des Begriffsnetzes vollzogen.

Zu jeder Lesart eines Lemmas können eine oder mehrere Strukturformeln angegeben werden. Jede unterschiedliche Strukturformel einer Lesart eines Lemmas stellt eine Mikrolesart der verbalen Definition dar. Mikrolesarten werden eingeführt, da die verbalen Lesarten selbst wieder mehrdeutig sein können und daher auf der Ebene der strukturellen Definition unterschiedliche Interpretationen erfahren.

So können zu jeder Lesart eines Lemmas Strukturformeln angegeben werden, die die sprachlich ausgedrückten Bedeutungsdefinitionen in Formeln bzw. mathematischen Notationen wiedergeben. Diese Strukturformeln bilden die Voraussetzung für die automatische Bearbeitung der begrifflichen Strukturen eines Begriffssystems. Die mit Hilfe von Strukturformeln wiedergebbaren begrifflichen Strukturen eines Begriffssystems können auch in grafischer Form dargestellt werden, was für einen Benutzer erheblich übersichtlicher und damit verständlicher ist. Die erfindungsgemäße Vorrichtung liefert die Voraussetzungen zum Realisieren umfangreicher "netzartiger" Begriffssysteme auf der Grundlage der den einzelnen Lesarten eines Wortschatzes zugeordneten Strukturtormeln.

Die erfindungsgemäße Vorrichtung ermöglicht und unterstützt das Erfassen der Wörter eines Wortschatzes zusammen mit lexikalischen Angaben sowie den verschiedenen Bedeutungen jedes Wortes und in Verbindung damit das Erfassen der dem Wortschatz zugeordneten begrifflichen Strukturen. Mit der erfindungsgemäßen Vorrichtung können nämlich gleichzeitig und in gegenseitiger Abhängigkeit sowohl der Wortschatz als auch die zugehörigen Strukturen aufgebaut und bearbeitet werden.

In einer vorteilhaften Ausgestaltung der erfindinngsgemäßen Vorrichtung umfaßt die Benutzeroberfläche mehrere, wahlweise parallel, ganz oder teilweise visualisierbare Fenster mit Datenfeldem. Durch eine derartige Gestaltung der Benutzeroberfläche können die Daten sehr übersichtlich visualisiert werden. Dadurch können eine systematische Eingabe und Bearbeitung der Daten unterstützt werden und Bedienungsfehler vermieden werden. Besonders vorteilhaft in diesem Zusammenhang ist es, wenn jedes Fenster der Benutzeroberfläche auch individuell gestaltbar ist, indem sowohl die Anzahl der Datenfelder als auch deren Datenkategorie vorgebbar ist. Auf diese Weise lassen sich einfach Datensätze mit einer individuellen, auf den speziellen Anwendungsfall zugeschnittenen Auswahl von Daten erfassen und abspeichern.

In einer Realisierungsform der erfindungsgemäßen Vorrichtung werden zwei Typen von Fenstern verwendet: das Wortschatzfenster und das Visualisierungsfenster. Das Wortschatzfenster besteht aus drei Unterfenstern: Lemmafenster, Merkmalsstrukturfenster und Lesartenfenster. Das Lemmafenster ist für die Eingabe und textuelle Darstellung eines Wortes und eine Identifikationsnummer vorgesehen. Das Merkmalsstrukturfenster dient zur Erfassung, Darstellung und Bearbeitung von Merkmalen, die zur Beschreibung von Lemmata verwendet werden sollen.

Von besonderem Vorteil ist es nun, wenn die Merkmale, die zur Beschreibung der Wörter eines Wörterbuchs verwendet werden sollen, frei gewählt werden können und zu einer individuellen Merkmalsstruktur zusammengefügt werden können. Merkmalsstrukturen, die generell für bestimmte Arten von Wörtern verwendet werden sollen, z.B. für Substantive oder Verben, können als Vorlage - Prototypen - gespeichert und auf die entsprechenden Wörter gezogen werden.

Neben dem Lemmafenster und dem zweiten Fenster, das die Merkmalsstruktur eines Wortes wiedergibt, kann ein drittes Fenster bzw. Unterfenster für die unterschiedlichen Lesarten des im Lemmafenster dargestellten Wortes - die Bedeutungen oder Definitionen - vorgesehen sein. Von Vorteil ist es, wenn auch dieses Unterfenster individuell gestaltbar ist, so daß beliebig viele Lesarten eines Wortes erfaßt werden können. Jede Lesart kann außerdem durch bestimmte Angaben gekennzeichnet werden, wie z.B. ein Verwendungsbeispiel oder das Sachgebiet, dem eine bestimmte Lesart zuzuordnen ist. Zusätzlich können jeder Lesart ein identifizierender numerischer oder alphanumerischer Code und beliebig viele Notationen eines frei wählbaren Ordnungssystems zugewiesen werden.

Oftmals können Daten einer bestimmten Datenkategorie ganz unterschiedlich visualisiert werden. So können bspw. die lexikalischen Merkmale eines Worts über alphanumerische Symbole dargestellt werden oder auch über grafische Symbole. In einer vorteilhaften Variante der erfindungsgemäßen Vorrichtung sind unterschiedliche Visualisierungsformen für die Daten bestimmter Datenkategorien vorgesehen. In die-sem Zusammenhang ist es vorteilhaft, wenn die Mittel zum Bearbeiten der Daten eine Informationsumsetzung vorsehen, so daß bei einer Veränderung von Daten in einer Visualisierungsform automatisch auch alle anderen Visualisierungsformen dieser Daten entsprechend verändert werden. Wird also z.B. ein lexikalisches Merkmal eines Wortes in einem Fenster in alphanumerischer Form dargestellt und in einem anderen Fenster in grafischer Form und wird die Angabe dieses Merkmals in einem der Fenster verändert, so wird automatisch auch die entsprechende Angabe dieses Merkmals in dem anderen Fenster entsprechend verändert, obwohl die beiden Merkmale in unterschiedlichen Visualisierungsformen dargestellt sind.

Von besonderer Bedeutung sind die unterschiedlichen Visualisierungsformen für die Darstellung der begrifflichen Strukturen. Wie bereits erwähnt, können diese sowohl als Formeln als auch als grafische Strukturen dargestellt werden.

In einer besonders vorteilhaften Variante der erfindungsgemäßen Vorrichtung sind die Mittel zum Bearbeiten der Daten so ausgelegt, daß eine Informationsumsetzung dahingehend vorgesehen ist, daß bei einer Veränderung der formelmäßigen Darstellung einer Struktur automatisch auch die grafische Darstellung dieser Struktur entsprechend verändert wird und genauso auch bei einer Veränderung der grafischen Darstellung einer Struktur automatisch die formelmäßige Darstellung dieser Struktur entsprechend verändert wird. Die erfindungsgemäße Vorrichtung unterstützt hier also die Umformung von Strukturformeln in grafisch bearbeitbare begriffliche Strukturen sowie die Transformation von grafisch dargestellten Strukturen in Strukturtormeln. Die Formeln, die einen wesentlichen Teil des zu erfassenden Begriffssystems ausmachen, können hier mit Hilfe der erfindungsgemäßen Vorrichtung in einem interaktiv steuerbaren Verfahren generiert werden und müssen nicht mehr vollständig über die Tastatur eingegeben werden.

In einer weiteren vorteilhaften Variante der erfindungsgemäßen Vorrichtung sind die Mittel zum Manipulieren von visualisierten Daten in der Benutzeroberfläche so ausgelegt, daß eine in einem Fenster dargestellte Formel auswählbar ist und in ein anderes Fenster übertragbar ist, wo die der Formel entsprechende Struktur grafisch dargestellt wird, und daß genauso eine in einem Fenster grafisch dargestellte Struktur auswählbar ist und in ein anderes Fenster übertragbar ist, wo die grafische Struktur dann als Formel dargestellt wird. Soll also bspw. eine als Formel dargestellte Struktur modifiziert werden, so kann diese einfach mit der Maus oder einem anderen Mittel zum Manipulieren der in der Benutzeroberfläche visualisierten Daten in ein Fenster übertragen werden, wo diese Struktur grafisch dargestellt wird. Die grafische Struktur kann nun ebenfalls mit Hilfe der Maus modifiziert werden. Jeder Begriff kann mit der Maus selektiert werden, um die Relationen, mit denen der Begriff definiert ist, zu verändern oder durch zusätzliche definierende Relationen zu ergänzen. Dabei werden die Begriffe, die zur Definition herangezogen werden sollen, ebenfalls mit der Maus selektiert. Ist die vom Benutzer gewünschte Definitionsstruktur erstellt worden, kann das Arbeitsergebnis einer Lesart eines Lemmas zugewiesen werden. Dies erfolgt dadurch, daß der Knoten des gerade definierten Begriffs mit der Maus aus dem Visualisierungsfenster in das Lesartenfenster gezogen wird, und zwar in die Formelposition der gewünschten Lesart des Lemmas. Dabei wird die grafisch dargestellte Struktur in eine Strukturformel umgewandelt, die dann abgespeichert werden kann.

In einer Erweiterung dieser Variante der erfindungsgemäßen Vorrichtung sind die Mittel zum Manipulieren von visualisierten Daten in der Benutzeroberfläche außerdem so ausgelegt, daß eine in einem Fenster dargestellte Formel auswählbar ist und in ein anderes Fenster übertragbar ist, wo die der Formel entsprechende begriffliche Struktur dann in eine bereits vorhandene grafisch dargestellte Struktur eingebunden wird. Das bedeutet, daß der Benutzer in einem Fenster immer nur diejenigen Strukturen zusammenfügen lassen kann, die für den jeweiligen Arbeitsprozeß benötigt werden. Er wird somit nicht durch Begriffe und deren Strukturen gestört, die er z.B. bei der Konstruktion von neuen Begriffen nicht zur Definition verwenden will.

In einer weiteren Variante der erfindungsgemäßen Vorrichtung sind die Mittel zum Bearbeiten der Daten so ausgelegt, daß begriffliche Strukturen aus Datensätzen mehrerer Wörterbücher zusammen in einem Visualisierungsfenster grafisch dargestellt werden können. Dabei werden alle selektierten Formeln aus den Wörterbüchern in einem einzigen Begriffssystem vereinigt und zusammen visualisiert. Wenn die durch die Formeln selektierten Begriffe Lesarten aus verschiedenen Wörterbüchern zugeordnet sind, werden die Lemmata dieser Begriffe gemeinsam als Beschriftung der Knoten angezeigt. So erscheinen die übersetzungsäquivalenten Lemmata aus verschiedensprachigen Wörterbüchern jeweils an denselben Knoten. Dies stellt eine große Hilfe beim Anfertigen von Übersetzungen dar.

In einer weiteren Variante der erfindungsgemäßen Vorrichtung wird die Eingabetechnik zum Erfassen und Bearbeiten der Daten so ausgelegt, daß Begriffe nicht nur aus anderen, schon erfaßten Begriffen definitorisch konstruiert werden können, sondern sich auch als axiomatische Begriffe undefiniert einführen lassen. Dies erspart dem Benutzer die Mühe, in jedem Fall für das zu definierende Wort eine Definitionsstruktur aus zweistelligen, gerichteten Relationen aufzubauen. Die undefiniert eingeführten Begriffe können dadurch als Struktur unterschieden werden, daß ihnen vom Benutzer eine numerische hierarchische Notation zugewiesen wird. Die so erzeugten Begriffe werden in der grafischen Darstellung mit einer Folge von natürlichen Zahlen gekennzeichnet. Die Zahlen werden entsprechend der hierarchischen Ebene und Position durch Punkte getrennt. Diese Notationen können auch so aufgebaut werden, daß sie zwei oder mehr hierarchische Notationen zu einer multihierarchischen Notation vereinigen. Definierte Begriffe können mit solchen axiomatischen Begriffen oder mit anderen definierten Begriffen konstruiert werden. Undefinierte Begriffe können auch als Unterbegriffe von definierten Begriffen durch Notationen eingeführt werden (subaxiomatische Begriffe).

In einer weiteren Variante der erfindungsgemäßen Vorrichtung wird die Eingabetechnik zum Erfassen und Bearbeiten der Daten so ausgelegt, daß schon erfaßte Strukturen aus Begriffen und Relationen in systematischer Weise bearbeitet werden können. Der Benutzer kann einen axiomatischen oder subaxiomatischen Begriff in der grafischen Oberfläche auswählen und diesen Begriff zusammen mit den von ihm abhängigen hierarchisch nach oben, nach unten oder zu einer anderen Position verschieben. Diese Operationen sind die Voraussetzung dafür, daß schon entwickelte Begriffssysteme in effizienter Weise so abgewandelt werden können, wie das den jeweiligen Einsichten der Entwickler bzw. den aktuellen Bedürfnissen der Anwendung entspricht. Eine hierarchische Verschiebung eines Begriffs nach unten bedeutet, daß die betroffene Struktur um eine hierarchische Ebene erweitert wird. Alle Verweise auf Wörter, die von dem ausgewählten Knoten und den von diesem Knoten abhängigen Knoten ausgehen, werden auf Knoten gelegt, die eine hierarchische Ebene tiefer liegen. Die Position auf dieser tieferen Ebene kann der Benutzer auswählen. Bei der hierarchischen Verschiebung nach oben wird die Operation in die andere Richtung, d.h. im Sinne einer Verallgemeinerung oder Abstraktion, durchgeführt. Dabei werden weitere Strukturen, die gegebenenfalls von dem direkt übergeordneten Begriff zusätzlich abhängen, gelöscht. Die Operation des Zur-Seite-Verschiebens kopiert den beispielsweise mit der Maus ausgewählten Begriff mit allen seinen abhängigen Begriffen an einen anderen Begriff, auf den die Maus geführt wird, und löscht die kopierte Struktur an der ursprünglichen Stelle der Hierarchie. Alle diese Operationen wirken auf alle in einer Sitzung geladenen Wörterbücher. Sämtliche Strukturformeln in den geladenen Wörterbüchern werden durch diese Operationen automatisch abgewandelt. Der Benutzer muß nicht bestehende Strukturen löschen, um sie an anderer Stelle wieder neu zu konstruieren. Auf diese Weise können große Wörterbücher verschiedener Sprachen mit den zugehörigen Strukturen sehr effizient aufgebaut, überarbeitet und weiterentwickelt werden.

Nachfolgend werden nochmals die wesentlichen Aspekte der verschiedenen Varianten der erfindungsgemäßen Vorrichtung zusammengefaßt:
- Die zu einem Wort - Lemma - einer Wörterbuchdatei gehörenden Wortdaten und die zu einem Wort gehörenden verbalen Bedeutungsdefinitionen - Lesarten - können in je einem eigenen Bildschirmfenster dargestellt werden.
- Zu jeder Lesart eines Wortes können bestimmte Lesartangaben und eine beliebige Zahl von bedeutungsbeschreibenden Strukturen als Formeln codiert und abgespeichert werden.
- Die Strukturen sind aus Begriffen und Relationen zusammengesetzt, wobei für undefinierte Begriffe Notationen verwendet werden können und definierte Begriffe mit zweistelligen, gerichteten Relationen festgelegt werden.
- Die den Strukturformeln entsprechenden begrifflichen Strukturen können in grafischer Darstellung in einem oder in mehreren Visualisierungsfenstern dadurch angezeigt werden, daR die Formeln mit der Maus ausgewählt, durch Ziehen der Maus aus dem Lesartenfenster in ein Visualisierungsfenster übertragen und dort als grafische Strukturen visualisiert werden.
- Alle begrifflichen Strukturen, die in Visualisierungsfenster gezogen werden, können mit den dort schon vorhandenen zusammengefügt werden und als eine Gesamt-struktur im Visualisierungsfenster angezeigt werden.
- Die begrifflichen Strukturen jedes Visualisierungsfensters können vom Benutzer durch grafische Konstruktion verändert und erweitert werden.
- Mit der Maus selektierte Teile der dargestellten begrifflichen Strukturen jedes Visualisierungsfensters können durch begriffsbezogene Strukturoperationen in ihrer relativen Position innerhalb der Begriffshierachie nach oben, nach unten sowie auf gleicher Hierachieebene seitlich verschoben werden.
- Die mit der Maus selektierten Teile der veränderten begrifflichen Strukturen eines Visualisierungsfensters können durch Ziehen der Maus wieder einer Lesart eines Lemmas im Lesartenfenster zugewiesen werden und im Lesartenfenster in eine als Text abspeicherbare Formel umgewandelt werden.
- Mehrsprachigkeit und Übersetzung werden durch die Verwendung von Ausdrücken einer gemeinsamen universalen Begriffssprache in allen Wörterbuchdateien begründet, wobei mehrere Wörterbücher, die je einer Sprache zugeordnet sind, mit einem gemeinsamen Visualisierungsfenster verwendet werden, wobei die Wörter verschiedener Sprachen, deren Lesarten die gleichen Strukturformeln haben, im Visualierungsfenster an denselben Knoten der dargestellten begrifflichen Struktur erscheinen.

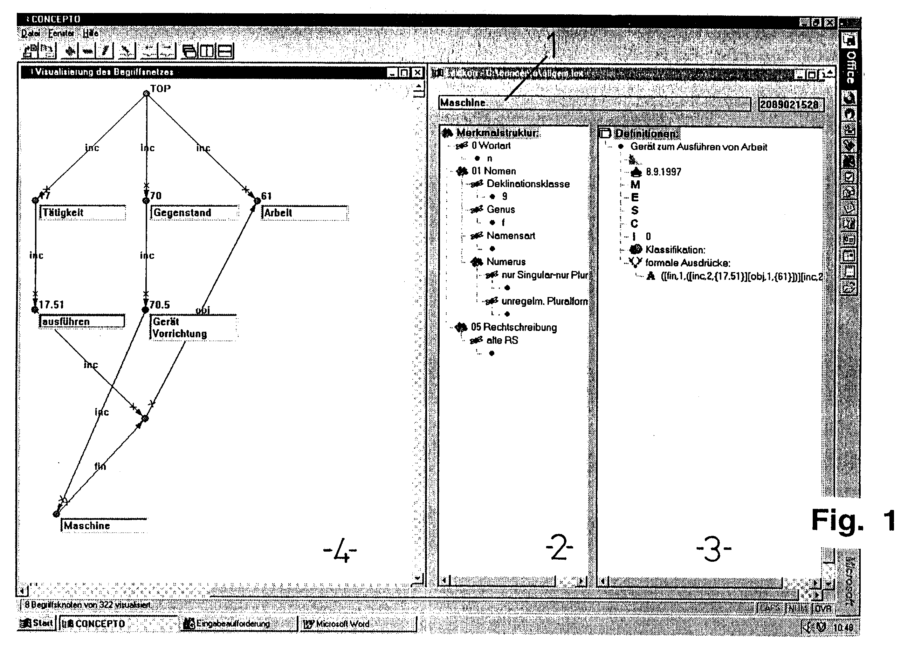

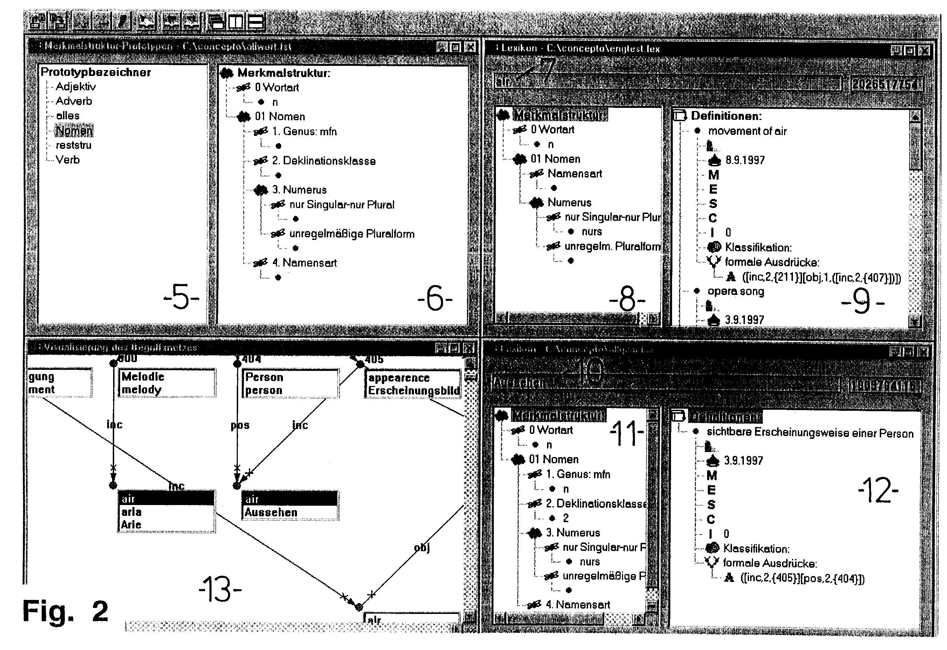

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung der Verwendungsweise einer erfindungsgemäßen Vorrichtung anhand der beiden Figuren 1 und 2 zu verweisen, die zwei unterschiedliche Benutzeroberflächen zeigen.

Die in Figur 1 dargestellte Benutzeroberfläche umfaßt insgesamt vier Fenster, ein Lemmafenster 1, in dem der Begriff "Maschine" angezeigt ist. Zusätzlich zu dem Lemma "Maschine" sollen hier die zugeordneten lexikalischen Merkmale, die verschiedenen Lesarten und diesen Lesarten zugeordnete Angaben erfaßt werden. Außerdem soll das Lemma "Maschine" in ein bereits vorhandenes Begriffssystem integriert werden, indem dem Lemma "Maschine'' eine begriffliche Definitionsstruktur zugewiesen ist.

Das Fenster 2 der dargestellten Benutzeroberfläche umfaßt mehrere Datenfelder, die für bestimmte Datenkategorien bestimmt sind, nämlich Wortart, Deklinationsklasse, Genus, Namensart, nur Singular-nur Plural, unregelmäßige Pluralform, alte Rechtschreibung. Mit diesen Datenfeldern wird quasi eine Maske zum Erstellen einer bestimmten Merkmalsstruktur für das Lemma "Maschine" zur Verfügung gestellt. Zur Erfassung der lexikalischen Daten muß der Benutzer nur die entsprechenden Datenfelder im Fenster 2 der Benutzeroberfläche ausfüllen.

In ähnlicher Weise ist das Fenster 3 der Benutzeroberfläche gestaltet. Hier sind Datenfelder für verschiedene mögliche Definitionen bzw. Lesarten des Lemmas "Maschine" vorgesehen. Im vorliegenden Fall umfaßt das Fenster 3 lediglich ein solches Datenfeld, das mit der verbalen Definition "Gerät zum Ausführen von Arbeit" belegt ist. Zusätzlich zu den Lesarten können hier weitere Angaben aufgenommen werden, wie z.B. das Datum der Eintragung - hier 8.9.1997-, ein Anwendungsbeispiel, und eine Klassifikation, die das Lemma "Maschine" bspw. einem bestimmten Fachgebiet zuordnet.

Schließlich ist im Fenster 3 noch ein Datenfeld für die formelmäßige Darstellung der begrifflichen Struktur der hier gegebenen Lesart für das Lemma "Maschine" vorgesehen.

Diese im Fenster 3 formelmäßig dargestellte Relation ist im Fenster 4 nochmals grafisch wiedergegeben. Daraus ergibt sich bspw., daß der Begriff "Maschine" den Begriffen "Gerät" und "Vorrichtung" untergeordnet ist, so wie diese Begriffe dem noch allgemeineren Begriff "Gegenstand" untergeordnet sind. Eine derartige Unterordnung ist durch die Relation "inc" für Inklusion wiedergegeben.

Die in Figur 1 dargestellte Variante sieht also für das Lemma selbst ein eigenes Fenster 1 vor, während die zu diesem Lemma gehörenden lexikalischen Daten und seine verschiedenen Lesarten jeweils in einem eigenen Bildschirmfenster 2, 3 dargestellt werden. Die lexikalischen Daten des Lemmas werden im Fenster 2 erfaßt und visualisiert, das eine individuell gestaltete Merkmalsstruktur wiedergibt. Die Lesarten des Lemmas werden im Fenster 3 für Definitionen erfaßt. Außerdem können hier auch zu jeder Lesart Strukturformeln erfaßt werden, die die Relationen zwischen einzelnen Begriffen eines Wörterbuchs und der jeweiligen Lesart wiedergeben. Die Strukturformeln werden aus Notationen für undefinierte Begriffe und aus zweistelligen definierenden Relationen eines Relationsinventars gebildet.

In der in Figur 1 dargestellten Situation ist die in Fenster 3 als Formel wiedergegebene begriffliche Struktur in Fenster 4 als grafische Struktur visualisiert. Dazu wurde die Formel aus Fenster 3 mit einer Maus ausgewählt. Durch Ziehen der Maus wurde die Formel mit dem Fenster 4 verknüpft und dort visualisiert. Die Begriffe in der definierenden Struktur für die Lesart "Maschine", die in der Wörterbuchdatei bei anderen Lemmata eingetragen sind, erhalten als Knotenbeschriftung die entsprechenden Lemmata. "Gerät", "Vorrichtung", "Gegenstand" usw. sind solche Lemmata, denen durch Formeln Begriffe zugewiesen sind, die in der Definitionsstruktur der vorliegenden Lesart für "Maschine" vorkommen.

Die begrifflichen Strukturen jedes Visualisierungsfensters können vom Benutzer durch Anwendung von Strukturoperationen systematisch verändert werden. Dazu gehören Operationen, die abhängige Begriffe eines Begriffs auf eine andere Begriffsposition im Begriffssystem kopieren. Die mit der Maus selektierten Teile der veränderten begrifflichen Strukturen eines Visualisierungsfensters können durch Ziehen der Maus wieder einer Lesart eines Lemmas im "Lesarten"-Fenster 3 zugewiesen und dort in eine Formel umgesetzt werden.

Figur 2 zeigt eine Benutzeroberfläche beim Arbeiten mit zwei Wörterbüchern und eine Vorlage für Merkmalsstrukturen.

Im Fenster 5 sind verschiedene Wortarten als Prototypbezeichner aufgeführt, nämlich Adjektiv, Adverb, alles, Nomen, reststru und Verb. Für jede dieser Wortarten existiert eine eigene Merkmalsstruktur, die in Form eines Fensters mit Datenfeldern bestimmter Datenkategorien realisiert ist. Beispielhaft ist im Fenster 6 eine Merkmalsstruktur für die Wortart Nomen dargestellt. Diese in Fenster 6 angegebene Merkmalsstruktur findet sich in dem rechten oberen Quadranten und in dem rechten unteren Quadranten der dargestellten Benutzeroberfläche wieder.

Der rechte obere Quadrant dient der Visualisierung der Daten eines englischsprachigen Wörterbuches. Er umfaßt ein Lemmafenster 7, in dem das Lemma "Air" wiedergegeben ist, ein Fenster 8 mit der zugeordneten Merkmalsstruktur und ein Fenster 9 mit verschiedenen Lesarten des Lemmas "Air". Das Fenster 9 umfaßt mehrere Lesarten, von denen lediglich zwei sichtbar sind, nämlich "Movement of Air" und "Opera Song".

Der rechte untere Quadrant dient der Visualisierung der Daten eines deutschsprachigen Wörterbuches. Hier ist ebenfalls ein Lemmafenster 10 dargestellt, in dem das Lemma "Aussehen" wiedergegeben ist, das einer Bedeutung des englischsprachigen Lemmas "Air" entspricht. Ein Fenster 11 gibt die zugeordnete Merkmalsstruktur wieder, während in einem Fenster 12 die Lesarten des im Fenster 11 wiedergegebenen Lemmas "Aussehen" angegeben sind.

Die gemeinsame Lesart der beiden Lemmata "Air" und "Aussehen" ist im Fenster 13 dargestellt, wo die Einbindung der verschiedenen Lesarten des englischsprachigen Lemmas "Air" und des übersetzungsäquivalenten deutschsprachigen Lemmas in ein Begriffssystem dargestellt ist.

Abschließend sei nochmals darauf hingewiesen, daß die erfindungsgemäße Vorrichtung die Möglichkeit bietet, sprachbezogene Begriffssysteme aufzubauen, indem Strukturen nicht unabhängig von den Wörtern eines Wörterbuchs interaktiv vom Benutzer erstellt werden, sondern aus den Strukturformeln generiert werden, die bei den Wörtern in einem Wörterbuch geführt werden. Derartige Wörterbücher bilden die Datenbasis, aus denen Begriffssysteme verschiedener Art zusammengestellt werden können. Die erfindungsgemäße Vorrichtung ermöglicht eine einfache Entwicklung und Pflege von derartigen Begriffssystemen. Neben einer schnellen Erfassung der Daten auf einer entsprechend konzipierten Benutzeroberfläche bieten die verschiedenen Visualisierungsformen der begrifflichen Strukturen eines Wörterbuchs, einfache, übersichtliche und damit gut handhabbare Manipulierungsmöglichkeiten, die zum Aufbau eines umfangreichen und damit sehr komplexen Begriffsystems unerläßlich sind.

## Patentansprüche

1. Vorrichtung zum systematischen Erfassen und Bearbeiten von sprachbezogenen Daten, mit einer Eingabevorrichtung und mindestens einem Monitor zum Visualisieren zumindest eines Teils einer Benutzeroberfläche, mit Mitteln zum Manipulieren von visualisierten Daten in der Benutzeroberfläche, mit Mitteln zum Bearbeiten der Daten und mit Mitteln zum Abspeichern der Daten,
**dadurch gekennzeichnet**, daß die Benutzeroberfläche die Eingabe und Visualisierung von sprachbezogenen Daten unterschiedlicher Kategorie vorsieht, nämlich:
- Eintragswort (Lemma)
- lexikalische Daten des Lemmas
- verbale Bedeutungsdefinitionen (Lesarten) des Lemmas
- Angaben zu den einzelnen Lesarten des Lemmas
- Strukturformeln zu den einzelnen Lesarten des Lemmas (strukturelle Bedeutungsdefinitionen)
- begriffliche Strukturen,
indem die Benutzeroberfläche zur Eingabe und Visualisierung der Daten verschiedene, jeweils für eine definierte Datenkategorie bestimmte Datenfelder aufweist, und daß die Mittel zum Abspeichern der Daten so ausgelegt sind, daß die eingegebenen Daten zusammen mit der dem jeweiligen Datenfeld entsprechenden Datenkategorie in Form eines Datensatzes abgespeichert werden.

2. Vorrichtung nach Anspruch 1, dadurch gekennzeichnet, daß die Benutzeroberfiäche mehrere, wahlweise parallel, ganz oder teilweise visualisierbare Fenster mit Datenfeldern umfaßt.

3. Vorrichtung nach Anspruch 2, dadurch gekennzeichnet, daß jedes Fenster individuell gestaltbar ist, indem die Anzahl der Datenfelder und deren Datenkategorie vorgebbar ist, und daß auf diese Weise Datensätze mit einer individuellen Auswahl von Daten abspeicherbar sind.

4. Vorrichtung nach einem der Ansprüche 2 oder 3, dadurch gekennzeichnet, daß ein erstes Fenster (Lemmafenster) für die Eingabe und Visualisierung eines Wortes und ein zweites Fenster für die diesem Wort zugeordneten Merkmale vorgesehen sind.

5. Vorrichtung nach einem der Ansprüche 2 bis 4, dadurch gekennzeichnet, daß ein drittes Fenster für die Definitionen des im ersten Fenster dargestellten Wortes und ggf. diesen Definitionen zugeordneten Angaben und Formeln einer Begriffssprache vorgesehen ist.

6. Vorrichtung nach einem der Ansprüche 1 bis 5, dadurch gekennzeichnet, daß unterschiedliche Visualisierungsformen für die Daten einer Datenkategorie vorgesehen sind.

7. Vorrichtung nach Anspruch 6, dadurch gekennzeichnet, daß die Mittel zum Bearbeiten der Daten eine Informationsumsetzung vorsehen, so daß bei einer Veränderung von Daten in einer Visualisierungsform automatisch auch alle anderen Visualisierungsformen dieser Daten entsprechend verändert werden.

8. Vorrichtung nach einem der Ansprüche 6 oder 7, dadurch gekennzeichnet, daß begriffliche Strukturen sowohl durch Formeln einer Begriffssprache als auch durch grafische Strukturen darstellbar sind.

9. Vorrichtung nach Anspruch 8, dadurch gekennzeichnet, daß die Mittel zum Bearbeiten der Daten eine Informationsumsetzung vorsehen, so daß bei einer Veränderung der formelmäßigen Darstellung einer begrifflichen Struktur automatisch auch die grafische Darstellung dieser begrifflichen Struktur entsprechend verändert wird und daß bei einer Veränderung der grafischen Darstellung einer begrifflichen Struktur automatisch auch die formelmäßige Darstellung dieser begrifflichen Struktur entsprechend verändert wird.

10. Vorrichtung nach einem der Ansprüche 8 oder 9, dadurch gekennzeichnet, daß die Mittel zum Manipulieren von visualisierten Daten in der Benutzeroberfläche so ausgelegt sind, daß eine in einem Fenster dargestellte Formel auswählbar ist und in ein anderes Fenster übertragbar ist, wo die der Formel entsprechende begriffliche Struktur grafisch dargestellt wird, und daß eine in einem Fenster grafisch dargestellte Struktur auswählbar ist und in ein anderes Fenster übertragbar ist, wo die der begrifflichen Struktur entsprechende Formel dargestellt wird.

11. Vorrichtung nach Anspruch 10, dadurch gekennzeichnet, daß die Mittel zum Manipulieren von visualisierten Daten in der Benutzeroberfläche so ausgelegt sind, daß eine in einem Fenster dargestellte Formel auswählbar ist und in ein anderes Fenster übertragbar ist, wo die der Formel entsprechende begriffliche Struktur in eine bereits vorhandene grafisch dargestellte Struktur eingebunden wird.

12. Vorrichtung nach einem der Ansprüche 1 bis 11, dadurch gekennzeichnet, daß die Mittel zum Bearbeiten der Daten so ausgelegt sind, daß mehrere begriffliche Strukturen von mehreren Wörterbuchdateien in einem gemeinsamen Visualisierungsfenster der Benutzeroberfläche darstellbar, insbesondere grafisch darstellbar, sind.

13. Vorrichtung nach einem der Ansprüche 1 bis 12, dadurch gekennzeichnet, daß die Ausdrücke der Begriffssprache die zu definierenden Begriffe unabhängig von irgendwelchen Wörtern der natürlichen Sprachen durch Angabe einer definierenden Struktur aus beliebigen, zweistelligen, gerichteten Relationen festlegen, wobei die undefinierbaren Begriffe in diesen Strukturen durch numerische, hierarchische Notationen eindeutig identifiziert werden.

14. Vorrichtung nach einem der Ansprüche 1 bis 13, dadurch gekennzeichnet, daß die Mittel zum Bearbeiten der Daten so ausgelegt sind, daß ein Begriff und die von ihm abhängigen Begriffe zusammen mit den definierenden Strukturen der abhängigen Begriffe im Begriffssystem kopiert werden können (Begriffsverschiebung in der Abhängigkeitshierarchie nach oben, nach unten bzw. zur Seite).
